# EUROPEAN PATENT APPLICATION

(11) **EP 3 720 083 A1**
(43) Date of publication of application: **07.10.2020**
(21) Application number: 19167558.6
(22) Date of filing: 05.04.2019
(51) Int. Cl.: H04L 29/06, H04L 29/08

(54) **ENCRYPTION FOR SENSORS IN A VEHICLE**

(71) Applicant: Visteon Global Technologies, Inc., Van Buren Township, MI 48111-5711 (US)
(72) Inventor: KOPFSTEDT, Thomas, 76227 Karlsruhe (DE); WILMER, Thorsten, 76646 Bruchsal (DE); WANG, Kai, Ettingen 76275 (DE)
(74) Representative: MERH-IP Matias Erny Reichl Hoffmann Patentanwälte PartG mbB

(57) **Abstract**

A data processing system (1) for a vehicle, comprises at least one sensor (2a, 2b, 2c), each generating sensor data; and, for each sensor (2a, 2b, 2c), a first interface (3) for outputting the generated sensor data to a serializer (4) for converting and encrypting the outputted sensor data, received from the first interface (3), into a serialized data stream which is encrypted using a specific key; a communication link (5) for transmitting the data stream between the serializer (4) and a deserializer (6) for converting and decrypting the transmitted serialized data stream using the specific key; and a second interface (7) for outputting the decrypted data stream to a data processing device (8) for processing the decrypted data stream.

## Description

### TECHNICAL FIELD

One or more embodiments described herein relate to a data processing system and a data processing method for a vehicle. In particular, a system and a method are provided which apply encryption to sensor data.

### BACKGROUND

Advanced Driver Assistance Systems (ADAS) have been proven to be effective in assisting drivers of vehicles. Hence in recent time, ADAS are being rapidly adopted in vehicles. Autonomous navigation, for example, is one desired functionality among the driver assistance functions offered by ADAS, which in turn is highly dependent on detecting the environment of the vehicle, in particular reliable and accurate lane detection as well as detection of other vehicles.

Camera sensors have been used extensively for detection of the vehicle's environment. Furthermore, LiDAR and/or radar sensors are being widely used. A potential problem can arise in case where fake or compromised sensor data is provided to the ADAS, when tampered sensors or third-party sensors, such as after-market or non-original equipment manufacturer's sensors, are used to provide the sensor data. Since the proper functioning of an ADAS requires reliable sensor data, it is important to protect an ADAS from fake or compromised sensor data.

### BRIEF SUMMARY OF THE INVENTION

Aspects of the present application are directed at providing a data processing system and a data processing method for a vehicle. In particular, aspects of the described data processing system and data processing method are directed at improving security and safety with regard to sensor data provided by sensors for detecting an environment of a vehicle.

According to an aspect, a data processing system for a vehicle may comprise at least one sensor for generating sensor data. In particular, each sensor may detect an environment of the vehicle. The at least one sensor may include, for example a camera and/or a LiDAR and/or a radar. In particular, the at least one sensor may be configured for receiving input images of the environment of the vehicle, including, for example, roads, surrounding buildings, a landscape, and/or other vehicles. According to an aspect, the input image may be received from one or more road sensors observing the vehicle's environment, such as one or more cameras, for example, front facing perspective cameras, side-facing fisheye cameras, a LiDAR sensor, and/or a radar sensor.

According to an aspect, the data processing system may comprise a first interface for outputting the generated sensor data. In particular, a first interface may be provided for each sensor. The first interface may be configured, for example, according to a Camera Serial Interface (CSI) specification, such as CSI-2. The first interface may be configured to output the sensor data to a serializer.

According to an aspect, the data processing system may comprise a serializer for converting and encrypting the sensor data, received from the first interface, into a serialized data stream which is encrypted using a specific key. The specific key may comprise High-bandwidth Digital Content Protection (HDCP). By encrypting the data stream, the use of specific sensors in non-desired applications or environments may be prevented. Furthermore, it may be prevented that the data stream from the sensor is tampered with or being recorded without authorization. Moreover, it may be prevented that the data stream gets corrupted, such that faults may be detected more reliably, which improves the overall safety of the system. According to an aspect, the serializer may be a high speed serializer implementing HDCP and project specific keys for encryption of the data stream.

According to an aspect, the data processing system may comprise a communication link for transmitting the data stream from the serializer to a deserializer. In particular, the communication link may be a high speed serial link for transmitting encrypted data streams.

According to an aspect, the data processing system may comprise a deserializer for converting and decrypting the transmitted serialized data stream using the specific key. According to an aspect, the deserializer may be a high speed deserializer implementing HDCP and project specific keys for decryption of the data stream.

According to an aspect, the data processing system may comprise a second interface for outputting the decrypted data stream. In particular, the second interface may receive the decrypted data stream from the deserializer and output the data stream to a data processing device. The second interface may be implemented as a Flat Panel Display Link (FPD-Link). According to another aspect, the second interface may be configured according to a Camera Serial Interface (CSI) specification, such as CSI-2.

According to an aspect, the data processing system may comprise a data processing device for processing the decrypted data stream. The data processing device may receive the decrypted data stream via the second interface. According to an aspect, the data processing device may be implemented as a system on a chip (SoC) as part of an Advanced Driver Assistance Systems (ADAS) of the vehicle. According to an aspect, the data processing device may comprise at least on central processing unit (CPU) and at least one random access memory (RAM).

According to an aspect, the serializer and the deserializer may be a Gigabit Multimedia Serial Link (GMSL).

According to an aspect, a data processing method for a vehicle may comprise a step of generating sensor data, in particular by means of at least one sensor, such as a camera, a LiDAR, and/or a radar.

According to an aspect, a data processing method for a vehicle may comprise a step of outputting the generated sensor data.

According to an aspect, a data processing method for a vehicle may comprise a step of converting and encrypting the outputted sensor data into a serialized data stream which is encrypted using a specific key, for example using HDCP.

According to an aspect, a data processing method for a vehicle may comprise a step of transmitting the data stream, in particular via a high speed serial link.

According to an aspect, a data processing method for a vehicle may comprise a step of converting and decrypting the transmitted serialized data stream using the specific key.

According to an aspect, a data processing method for a vehicle may comprise a step of outputting the decrypted data stream, in particular via a second interface to a data processing device.

According to an aspect, a data processing method for a vehicle may comprise a step of processing the decrypted data stream.

### BRIEF DESCRIPTION OF THE DRAWINGS

Fig. 1 shows an exemplary situation of a vehicle driving on a road.
Fig. 2 shows an example of a data processing system.
Fig. 3 shows a flowchart of a method according to an aspect.

### DETAILED DESCRIPTION OF THE INVENTION

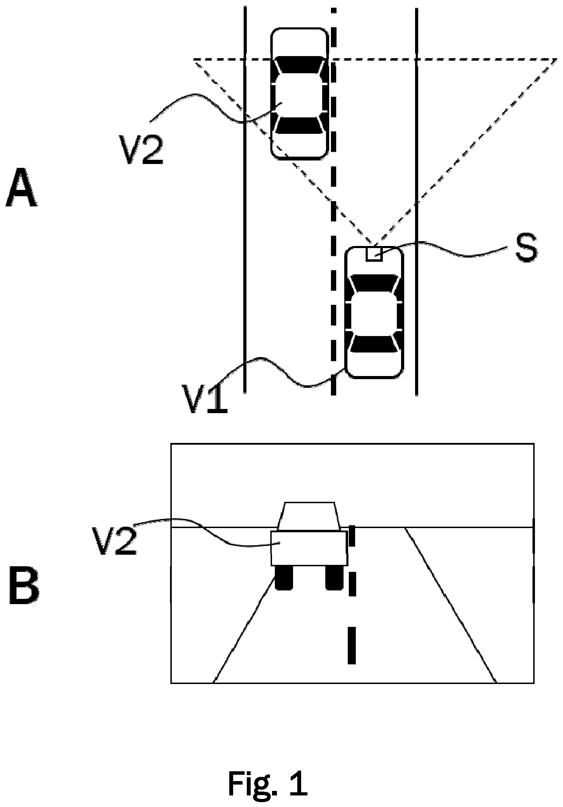

Fig. 1 illustrates an exemplary situation of a vehicle V1 driving on a road with another vehicle V2 driving in front of the vehicle V1. The vehicle V1 comprises a forward sensor S which may be a camera, a LiDAR sensor, a radar sensor, or the like, for detecting lane markings and or objects, such as the other vehicle V2, in front of the vehicle V1. In particular, sensor S can be one or more of the sensors 2a, 2b, 2c mentioned in the following description of a data processing system 1.

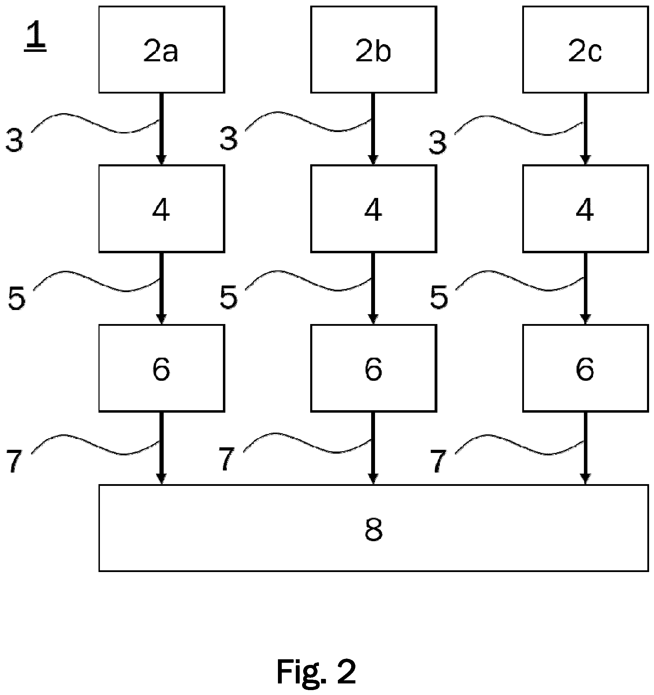

In the following, an embodiment of a data processing system 1 for a vehicle will be described. Fig. 2 shows a schematic drawing of a data processing system 1 comprising three sensors 2a, 2b, 2c, for example, a camera, for example front facing perspective cameras, side-facing fisheye cameras, a LiDAR sensor, a radar sensor, a thermal imaging sensor, and/or an ultrasonic sensor. Each sensor 2a, 2b, 2c may generate sensor data. In particular, the sensors 2a, 2b, 2c may be configured for receiving input images of the environment of the vehicle, including, for example, roads, surrounding buildings, a landscape, and/or other vehicles.

Each sensor 2a, 2b, 2c may output its generated data stream via a first interface 3 for. The first interface 3 may be configured, for example, according to a Camera Serial Interface (CSI) specification, such as CSI-2. Each first interface 3 may be configured to output the sensor data to a serializer 4.

For example, each of the sensors 2a, 2b, 2c may comprise a GMSL/FDP connection with a serializer 4 for serializing CSI data. Such serializers 4 may have the option for the output side to support HDCP, which may improve security and safety of the data, in particular by preventing fake sensor data, tampered sensors, and/or unauthorized products. The unauthorized products may replace original equipment manufacturer's products. The unauthorized products may be offered as after-market products by non-original-equipment-manufacturer third-parties.

Radar, LiDAR, and camera sensors 2 may be built in such a way that the output is a CSI-2 interface 3. This interface 3 may be connected to a high bandwidth serializer 4, such as GSML or FDP. Such a serializer 4 may support HDCP.

Each serializer 4 may convert and encrypt the sensor data, received from the first interface 3, into a serialized data stream which is encrypted using a specific key. The specific key may comprise High-bandwidth Digital Content Protection (HDCP). By encrypting the data stream, the use of the sensors 2a, 2b, 2c in non-desired applications or environments may be prevented. Furthermore, because of the encryption, it may be prevented that the data stream from sensors 2a, 2b, 2c is tampered with or being recorded without authorization. Moreover, the encryption may prevent the data stream from being corrupted. As such, because of the encryption, faults in a sensor sensors 2a, 2b, 2c or the first interface 3 may be prevented or detected more reliably, thereby improving the overall safety of the data processing system 1. According to an aspect, the serializer 4 may be a high speed serializer implementing HDCP and project specific keys for encryption of the data stream.

Each serializer 4 may use HDCP and/or a non-standard, project specific key for encrypting and protecting the data streams provided by the sensors 2a, 2b, 2c. Encryption of the sensor data stream may prevent the use of the sensors 2a, 2b, 2c in other non-authorized applications. For this purpose, the sensors 2a, 2b, 2c may store the project specific key using a programmable read-only memory (PROM), for example one time programmable (OTP) memory. Furthermore, the encryption may prevent the data stream from the sensors 2a, 2b, 2c from being tampered with and/or recorded without authorization. Moreover, the encryption may prevent the data stream from the sensors 2a, 2b, 2c from corruption, since then the whole data stream would not be available, such that the system 1 can reliably detect a fault, thereby improving overall safety of the system 1.

The sensor 2a, 2b, 2c may also comprise an analog-to-digital converter (ADC). The ADC may be comprised in the serializer 4.

Depending on the type of sensor, preprocessing may be carried out, for example by the serializer 4, in order to convert a raw sensor data stream into an image type (video) data stream.

The output of the serializer 4 may be transmitted by a communication link 5 to a deserializer 6.

The data processing system 1 may comprise a communication link 5 for transmitting the data stream from the serializer 4 to a deserializer 6. In particular, the communication link 5 may be a high speed serial link for transmitting encrypted data streams.

The data processing system 1 may further comprise a deserializer 6 for converting and decrypting the transmitted serialized data stream using the specific key. According to an aspect, the deserializer 6 may be a high speed deserializer implementing HDCP and project specific keys for decryption of the data stream.

The data processing system 1 may comprise a second interface 7 for outputting the decrypted data stream. In particular, the second interface 7 may receive the decrypted data stream from the deserializer 6 and output the data stream to a data processing device 8. The second interface 7 may be implemented as an FPD-Link. According to another aspect, the second interface 7 may be configured according to a Camera Serial Interface (CSI) specification, such as CSI-2.

The data processing system 1 may further comprise a data processing device 8 for processing the decrypted data stream. The data processing device 8 may receive the decrypted data stream via the second interface 7. The data processing device 8 may be implemented as a system on a chip (SoC) as part of an Advanced Driver Assistance Systems (ADAS) of the vehicle.

According to an aspect, the data processing device 8 may comprise at least on central processing unit (CPU) and at least one random access memory (RAM).

The data processing system 1 may be configured to fuse sensor data from more than one sensor 2a, 2b, 2c.

By means of the system and method according to aspects described herein, the output of the sensors 2a, 2b, 2c may effectively be protected. The effect of protection achieved by the system and method according to aspects described herein can thus be compared to that of a software protection dongle. In particular, the output of the sensors 2a, 2b, 2c may be protected against modification and/or recording. Furthermore, the use of tampered, unauthorized, and/or fake sensors 2a, 2b, 2c may be prevented, thereby improving the safety of an ADAS of a vehicle.

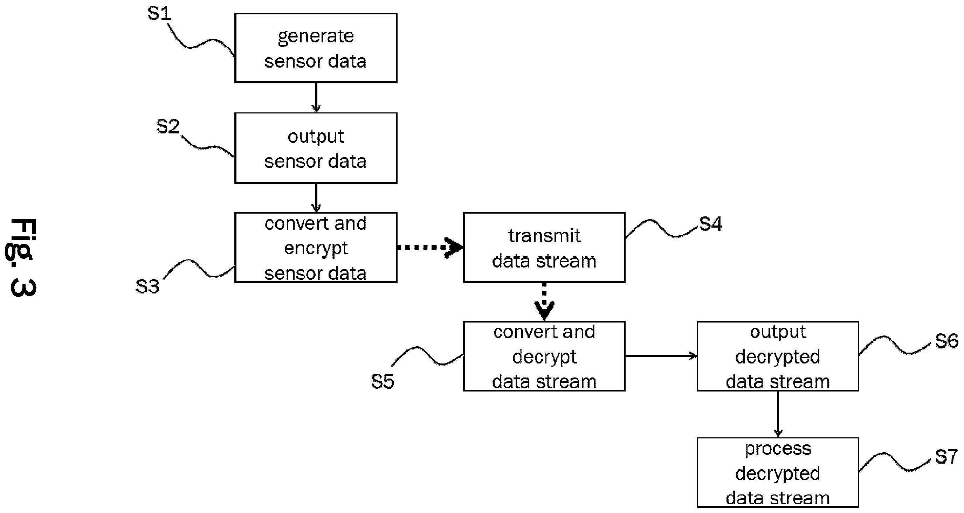

Fig. 3 illustrates a flowchart of a data processing method for a vehicle according to an aspect. In a first step S1 sensor data is generated, in particular by means of at least one sensor, such as a camera, a LiDAR, and/or a radar. In a second step S2, the generated sensor data is output. In a third step S3 of the method, the outputted sensor data is converted and encrypted into a serialized data stream which is encrypted using a specific key, for example using HDCP. The serialized data stream is illustrated by the dashed arrows. In a fourth step S4 of the method the data stream is transmitted, in particular via a high speed serial link.

In step S5, the transmitted serialized data stream is converted and decrypted using the specific key. In the next step S6, the decrypted data stream is outputted, in particular via a second interface to a data processing device according to an aspect described herein. Furthermore, in a last step S7, the decrypted data stream may be processed.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. A data processing system (1) for a vehicle, comprising:
at least one sensor (2a, 2b, 2c), each generating sensor data; and, for each sensor (2a, 2b, 2c):
a first interface (3) for outputting the generated sensor data to:
a serializer (4) for converting and encrypting the outputted sensor data, received from the first interface (3), into a serialized data stream which is encrypted using a specific key;
a communication link (5) for transmitting the data stream between the serializer (4) and
a deserializer (6) for converting and decrypting the transmitted serialized data stream using the specific key; and
a second interface (7) for outputting the decrypted data stream to:
a data processing device (8) for processing the decrypted data stream.

2. The data processing system (1) according to claim 1, wherein the first interface (3) and/or the second interface (7) are/is configured according to a Camera Serial Interface specification.

3. The data processing system (1) according to claim 1 or 2, wherein the at least one sensor (2a, 2b, 2c) is a camera and/or a LiDAR and/or a radar.

4. The data processing system (1) according to at least one of the preceding claims, wherein the specific key comprises High-bandwidth Digital Content Protection.

5. The data processing system (1) according to at least one of the preceding claims, wherein the data processing device (8) is comprised in an Advanced Driver Assistance Systems of the vehicle.

6. The data processing system (1) according to at least one of the preceding claims, wherein the serializer (4) and/or the deserializer (6) are/is a Gigabit Multimedia Serial Link.

7. A data processing method (1) for a vehicle, the method comprising:
generating (S1) sensor data;
outputting (S2) the generated sensor data;
converting and encrypting (S3) the outputted sensor data into a serialized data stream which is encrypted using a specific key;
transmitting (S4) the data stream;
converting and decrypting (S5) the transmitted serialized data stream using the specific key;
outputting (S6) the decrypted data stream; and
processing (S7) the decrypted data stream.
